# EUROPÄISCHE PATENTSCHRIFT

(11) **EP 1 048 993 B1**
(45) Veröffentlichungstag und Bekanntmachung des Hinweises auf die Patenterteilung: **03.12.2003**
(21) Anmeldenummer: 00107177.8
(22) Anmeldetag: 11.04.2000
(51) Int. Cl.: G05B 17/02

(54) **Verfahren zur wissensbasierten Planung eines komplexen technischen Systems**
Method for knowledge-based planning of a complex technical system
Procédé pour la planification d'un processus technique complexe basé sur la connaissance

(30) Priorität: 26.04.1999 DE 19918810
(43) Veröffentlichungstag der Anmeldung: 02.11.2000
(73) Patentinhaber: ABB PATENT GmbH, 68526 Ladenburg (DE)
(72) Erfinder: Wilhelm, Georg, Dipl.-Ing., 68723 Schwetzingen (DE); Woyzeschke, Peter, Dipl.-Ing., 69124 Heidelberg (DE); Schmiega, Manfred, Dipl.-Ing., 67295 Bolanden (DE); Heizmann, Axel, Dipl.-Ing., 69514 Laudenbach (DE); Tütken, Tilman, Dr. rer. nat., 68165 Mannheim (DE); Speh, Rainer, Dr.-Ing., 64331 Weiterstadt (DE)
(74) Vertreter: Miller, Toivo

(56) Entgegenhaltungen:
- FR-A- 2 724 744
- P.GU ET AL: "OOPPS: AN OBJECT-ORIENTED PROCESS PLANNING SYSTEM" COMPUTERS & INDUSTRIAL ENGINEERING, Bd. 26, Nr. 4, Oktober 1994 (1994-10), Seiten 709-731, XP000921097 UK
- H.GARCIA: "A HIERARCHICAL PLATFORM FOR IMPEMENTING HYBRID SYSTEMS IN PROCESS CONTROL" CONTROL ENGINEERING PRACTICE, Bd. 5, Nr. 6, Juni 1997 (1997-06), Seiten 779-789, XP000921168 UK

## Beschreibung

Die Erfindung bezieht sich auf ein Verfahren zur wissensbasierten Planung eines komplexen technischen Systems, wie beispielsweise einer Kraftwerksanlage.

Teile einer solchen wissensbasierten Planung sind beispielsweise bereits in der EP-A1-0770 945 und in der EP-A1-0770 944 beschrieben. Es ist daraus allerdings kein durchgängiges Verfahren für eine Planung sowohl eines primärtechnischen als auch wenigstens eines sekundärtechnischen Teils einer Anlage oder eines Gerätes entnehmbar.

Die EP-A1-0770 945 bezieht sich auf eine automatische Erstellung eines verfahrenstechnischen Schemas, wobei eine Umsetzung eines abstrakten verfahrenstechnischen Schemas in ein konkretes Schema durch Bearbeiten von Baugruppen einer obersten Ebene einer hierarchischen Baugruppen-Anordnung erfolgt. Dabei erfolgt eine Umsetzung von sogenannten Platzhaltern in konkrete Komponenten, indem in Abhängigkeit von Abbildungsvorschriften und Eingabevektoren unterlagerte Baugruppen aufgerufen und bearbeitet werden.

Die EP-A1-077 944 beschreibt ein Verfahren zur automatisierten Generierung von leittechnischen Strukturen. Diese Generierung setzt voraus, daß ein verfahrenstechnisches Schema vorhanden ist, wie zuvor beschrieben. Die leittechnischen Strukturen werden als konkrete Generixe in Form von Datensätzen erzeugt. Die konkreten Generixe sind nach leittechnischen Funktionen zeilenweise aufgebaut. Jede Zeile ist untergliedert in Angaben zum Wirkungsort, Verarbeitung, leittechnische Bedingung und Zustand. Das Verfahren benutzt als Wissensbasis abstrakte Generixe, die schrittweise gemäß einer gespeicherten Suchanweisung konkretisiert werden. Die erzeugten leittechnischen Strukturen lassen sich in Form von Funktionsplänen darstellen.

Der Erfindung liegt die Aufgabe zugrunde, auf dem vorgenannten Stand der Technik aufbauend ein Verfahren zur Gesamtplanung eines komplexen technischen Systems anzugeben. Das Verfahren soll als wissensbasiertes Werkzeug für Co-Design-Prozesse anwendbar sein.

Diese Aufgabe wird durch ein Verfahren zur wissensbasierten Planung mit den im Anspruch 1 angegebenen Merkmalen gelöst. Vorteilhafte Ausgestaltungen sind in weiteren Ansprüchen angegeben.

Das Verfahren ist im Prinzip zweistufig, enthält aber optional einen Zwischenschritt zur Änderung von Planungsergebnissen oder Zwischenergebnissen.

Das Verfahren kann vorteilhaft mit einem Dialogsystem zur Führung eines Benutzers in einer Aufbereitungs- und Eingabephase ausgestattet werden, wonach anschließend automatisiert und wissensbasiert Planungsergebnisse erarbeitet und ausgegeben werden.

Eine weitere Beschreibung des Verfahrens erfolgt nachstehend anhand eines in der Zeichnung dargestellten Ausführungsbeispiels.

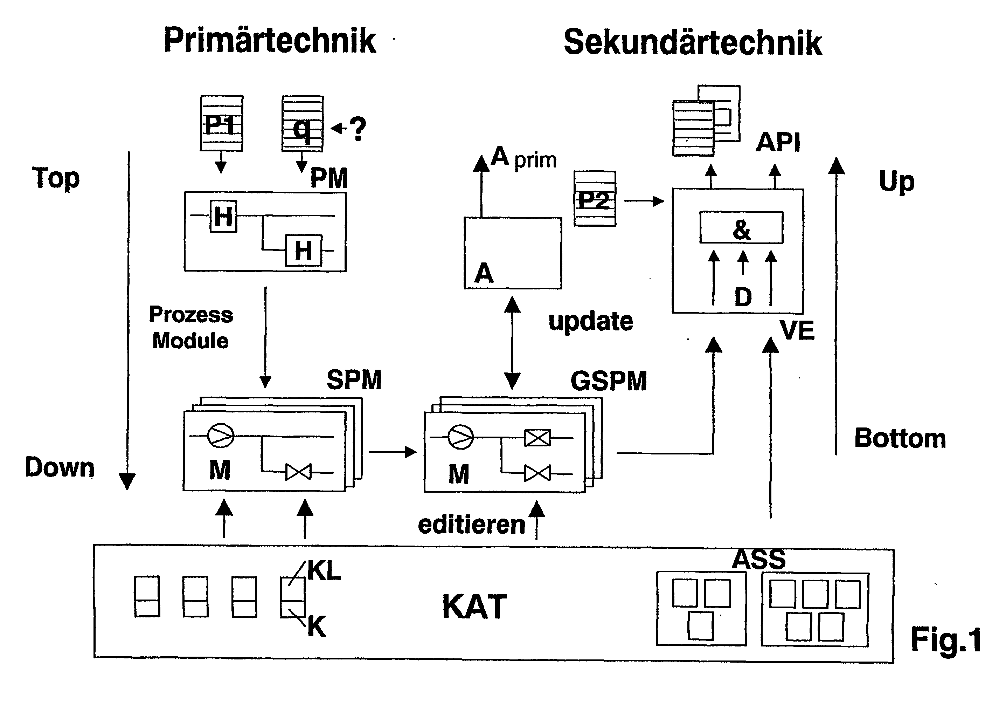

Fig. 1 zeigt eine schematisierte Darstellung des Planungsablaufs, der in einen primärtechnischen und mindestens einen sekundärtechnischen Teil gegliedert ist.

Mit Primärtechnik ist ein erster Teil des Planungsprozesses bezeichnet, der sich auf das Grunddesign einer Anlage oder eines Gerätes bezieht. Die Primärtechnik ist führend für die Gesamtplanung. Beispielsweise ist im Fall eines Kraftwerks die verfahrenstechnische Auslegung führend. Dazu gehören z.B. die Auslegung von Kessel, Turbine, Generator und Rohrleitungssystem.

Mit Sekundärtechnik wird ein zweiter Teil des Planungsprozesses bezeichnet, der die eigentlichen detaillierten Ergebnisse liefert. Aufbauend auf Ergebnissen des ersten Teils des Planungsprozesses können mehrere Sekundärtechniken geplant werden, wie z.B. das Kraftwerksleitsystem, die elektrische Ausrüstung oder die Gebäude, wobei in Fig. 1 nur eine Sekundärtechnik dargestellt ist.

Ergebnisse des primärtechnischen Planungsteils, insbesondere auch durch die sekundärtechnische Planung aktualisierte primärtechnische Planungsergebnisse Aprim können bei Bedarf mittels einer Ausgabeeinrichtung A ausgegeben werden.

Der erste Planungsteil wird als Top-Down-Prozess für unterschiedliche klar abgrenzbare Aufgabenbereiche der Primärtechnik durchgeführt. Diese Aufgabenbereiche sind als Prozeß-Module PM bezeichnet, die z.B. eine Speisewasseraufbereitung oder ein Pumpenantrieb sein können.

In einer vor einer ersten Anwendung des Planungswerkzeugs durchzuführenden Wissensaufbereitung werden die Prozeßmodule PM dadurch in anpassungsfähiger Form zur Verfügung gestellt, daß sogenannte Platzhalter H für Komponenten, wie z.B. Pumpen oder Ventile angeordnet werden. Die Module PM können in graphischer oder datentechnischer Form geschaffen werden.

Außerdem werden in einem zweiten Aufbereitungsprozeß Klassen KL im objektorientierten Sinn einschließlich zugehöriger Attribute und Informationen K definiert und in einem Katalog KAT gespeichert. Eine solche Klasse oder ein solches Objekt kann beispielsweise eine einzelne Meßstelle sein, z.B. "mit vier Grenzwerten" als Attribut oder mit zeichnerischen Attributen. Eine Klasse kann aber auch eine Zusammensetzung mehrerer Objekte zu sogenannten Assemblies ASS oder Bausätzen sein. Die zeichnerische Darstellung ergibt sich im Fall der Assemblies ASS aus den den einzelnen Objekten KL zugeordneten Attributen K.

Als Katalog KAT kann ein beliebiges Datenbank- oder File-System zum Einsatz kommen. Besonders geeignet ist eine objektorientierte Datenbank, weil sie die Eingabe und Pflege der einzelnen Objektklassen und Instanzen erleichtert.

Im Katalog KAT sind neben den Objektklassen auch Modulregeln M gespeichert, die Objekte ohne graphische Repräsentanz sind. Eine Modulregel M kann beispielsweise besagen, daß alle Geber für Schutzeinrichtungen in einer 2von3-Technik ausgeführt sein müssen, was beispielsweise auf den Kesselschutz im Kraftwerk zutrifft.

In dem als Top-Down-Prozeß durchführbaren ersten Planungsschritt werden spezifische Prozeßmodul-Varianten SPM gebildet, wobei durch einen Abfrage-Dialog geführt eine Eingabe von Antworten auf modul-spezifische Fragen q und eine Eingabe von anlagen-weiten Vorgaben der Primärtechnik P1 erfolgt, und wobei unter Berücksichtigung dieser Vorgaben und unter Verwendung der gespeicherten Klassen KL die Platzhalter H durch konkrete Komponenten ersetzt werden.

Eine modul-spezifische Frage q könnte z.B. lauten "wieviele Stränge hat die Speisewasserversorgung?" Eine anlagen-weite Vorgabe P1 könnte z.B. lauten "Benutze als Kennzeichnungssystem das Kraftwerk-Kennzeichnungssystem KKS".

Die anlagen-weiten Vorgaben der Primärtechnik P1 werden entweder wie vorgenannt im Dialog vom Benutzer am Beginn des Projektes oder Planungsvorgangs einmal eingegeben oder angepaßt, oder stehen mit ihren Vorgabewerten von Anfang an unverändert zur Verfügung.

Die modul-spezifischen Fragen q ergeben zusammen mit den analog-weiten Vorgaben der Primärtechnik P1 einen ein-eindeutigen Lösungsraum bzw. Lösungsvektor, der genau einer Designvariante zugeordnet werden kann. Die so ausgewählte Variante ersetzt damit den jeweiligen Platzhalter H. Die einzelnen Designvarianten werden aus Objekten gebildet, die im Katalog KAT abgelegt sind.

Den spezifischen Prozeßmodul-Varianten SPM werden im ersten Planungsschrittneben der Konkretisierung der Platzhalter H - auch alle weiteren Informationen und Daten beigefügt, die sich aus den Modulregeln M ergeben, und die im zweiten Planungsschritt benötigt werden.

Optional kann ein Zwischenschritt vorgesehen werden, der in Fig. 1 dargestellt ist, und in dem eine Nachbearbeitung oder Aktualisierung von im ersten Planungsschritt erarbeiteten spezifischen Prozeßmodul-Varianten SPM vorgenommen werden kann, so daß geänderte Prozeßmodul-Varianten GSPM entstehen. Für eine solche Aktualisierung können beispielsweise auch für den zweiten Planungsschritt vorgesehene Informationen und Daten (P2, D) herangezogen werden.

Der zweite Teil des Planungsprozesses wird als Bottom-Up-Prozeß unter Einsatz einer automatisiert arbeitenden Verarbeitungseinheit VE durchgeführt.

In diesem zweiten Planungsteil werden zuvor eingegebene und vorzugsweise in der Verarbeitungseinheit VE gespeicherte anlagen-weite Vorgaben der Sekundärtechnik P2 herangezogen. Eine solche Vorgabe oder Regel könnte z.B. lauten: "Wenn an einer Meßstelle drei binäre Geber benötigt werden, ersetze sie durch einen analogen Geber". Derartige Vorgaben können in einem gesonderten Dialog vom Benutzer angepaßt werden oder unverändert in der gespeicherten Standardvorgabe zum Einsatz kommen.

Die Verarbeitungseinheit VE, in der alle verfügbaren Daten und Informationen zusammengeführt werden, ist in ihrer Ausprägung abhängig von der jeweils zu planenden Sekundärtechnik. Sie ist daher einzeln für jede Sekundärtechnik, wie z.B. Leittechnik oder Elektrotechnik vorhanden.

Der Verarbeitungseinheit VE wird außerdem zuvor, d.h. vor ihrer Einsatzbereitschaft, sekundärtechnik-spezifisches Wissen in Form von Domänen-Regeln D eingegeben, das im Planungsprozeß herangezogen wird. Eine solche Domänen-Regel kann beispielsweise lauten: "Jeder Verarbeitungsschritt einer Schrittsteuerung hat eine Startbedingung, eine Überwachungszeit und Weiterschaltbedingung, bzw. eine einheitliche Fehlerbehandlung". In der Verarbeitungseinheit VE erfolgt die sekundärtechnische Planung auf der Basis der Ergebnisse des ersten Planungsschritts oder gegebenenfalls des Zwischenschritts. Dabei werden mit den vorgegebenen Informationen, wie Topologie des betrachteten Prozeßbereiches, darin enthaltenen Objekten, generisch oder als Bausätze, die vorliegenden bzw. angehängte Regeln des Objektes, des Moduls, der Domain oder auch anlagenspezifische Regeln abgearbeitet. Eine abzuarbeitende Aufgabe kann z.B. lauten: "Suche alle Pumpenantriebe in dem vorgegebenen Bereich und projektiere jeweils eine Alarmmeldung bei Schutz-Aus".

Eine Nachbearbeitung von Ergebnissen des ersten Planungsteils kann aufgrund von Ergebnissen der sekundärtechnischen Planung erforderlich werden. Solche Ergänzungen entsprechen dem vorgenannten Zwischenschritt, der sowohl iterativ als auch rekursiv, auch automatisiert erfolgen kann.

Die Ergebnisse des sekundären Designprozesses können in Form von Dokumenten, vorzugsweise in elektronisch papierloser Form zur Verfügung gestellt werden. Sie sind vorzugsweise und bestimmungsgemäß ausführungsneutral, d.h. lösungssystemunabhängig gehalten.

Über ein Application Programming Interface (API) können alle Daten zum Zwecke der Weiterverarbeitung, z.B. in einem Planungswerkzeug eines spezifischen Lösungssystems, bereitgestellt werden.

## Patentansprüche

1. Verfahren zur wissensbasierten Planung eines komplexen technischen Systems, wobei
a) in einem Gliederungsprozeß das System in einen den Planungsprozeß führenden primärtechnischen Teil (Primärtechnik) und wenigstens einen davon abhängigen sekundärtechnischen Teil (Sekundärtechnik) gegliedert wird,
b) in einem ersten Aufbereitungsprozeß der primärtechnische Teil in allgemeine Prozeß-Module (PM), die anpassungsfähige Platzhalter (H) für Komponenten enthalten, gegliedert wird,
c) in einem zweiten Aufbereitungsprozeß Klassen (KL) im objektorientierten Sinn einschließlich zugehöriger Attribute und Informationen definiert und in einem Katalog (KAT) gespeichert werden,
d) in einem als Top-Down-Prozeß durchgeführten ersten Planungsschritt spezifische Prozeßmodul-Varianten (SPM) gebildet werden, wobei durch einen Abfrage-Dialog geführt eine Eingabe von Antworten auf modul-spezifische Fragen (q) und eine Eingabe von anlagen-weiten Vorgaben der Primärtechnik (P1) erfolgt, und wobei unter Berücksichtigung dieser Vorgaben und unter Verwendung der gespeicherten Klassen (KL) die Platzhalter (H) durch konkrete Komponenten ersetzt werden,
e) in einem als Bottom-Up-Prozeß durchgeführten zweiten Planungsschritt, basierend auf den im ersten Planungsschritt gebildeten spezifischen Prozeß-Modul-Varianten (SPM), oder in einem Zwischenschritt noch geänderten Prozeß-Modul-Varianten (GSPM), sowie unter Berücksichtigung von zuvor eingegebener und gespeicherter anlagen-weiter Vorgaben der Sekundärtechnik (P2) und der gespeicherten Klassen (KL) mittels eines automatisiert arbeitenden Planungswerkzeugs (VE), das Sekundärtechnik-spezifisches Wissen in Form von Domänen-Regeln (D) enthält, lösungssystemunabhängige sekundärtechnische Planungsergebnisse erarbeitet und in einem Application Programming Interface (API) zur Weiterverarbeitung zur Verfügung gestellt werden.

2. Verfahren nach Anspruch 1, **dadurch gekennzeichnet, daß** mittels einer Ausgabeeinrichtung (A) außerdem Ergebnisse (Aprim) des ersten Planungsschritts, also der primärtechnischen Planung, insbesondere auch Ergebnisse einer Nachbearbeitung aufgrund sekundärtechnischer Planungsergebnisse, ausgegeben werden.

3. Verfahren nach Anspruch 1 oder 2, **dadurch gekennzeichnet, daß** im Katalog (KAT) auch Modulregeln (M) gespeichert werden, die zur Bildung der spezifischen Prozeßmodul-Varianten (SPM, GSPM) herangezogen werden.

## Claims

1. Method for knowledge-based planning of a complex technical system, in which
a) in a subdivision process, the system is subdivided into a primary technical part (primary technique) which controls the planning process, and at least one secondary technical part (secondary technique) which is dependent on it,
b) in a first conditioning process, the primary technical part is subdivided into general process modules (PM) which contain adaptable space keepers (H) for components,
c) in a second conditioning process, classes (KL) in the object-oriented sense are defined, including associated attributes and information, and are stored in a catalogue (KAT),
d) in a first planning step which is carried out as a top-down process, specific process module variants (SPM) are formed, in which responses to module-specific questions (q) and system-wide stipulations for the primary technique (P1) are input, controlled by a question dialogue, and in which, taking account of these stipulations and using the stored classes (KL), the space keepers (H) are replaced by specific components,
e) in a second planning step which is carried out as a bottom-up process, based on the specific process module variants (SPM) formed in the first planning step, or process module variants (GSPM) which are also changed in an intermediate step, and taking account of previously input and stored system-wide stipulations for the secondary technique (P2) and for the stored classes (KL), secondary technical planning results which are independent of the solution system are worked out by means of a planning tool (VE) which operates in automated manner and contains secondary-technique-specific knowledge in the form of domain rules (D), and are made available in an Application Programming Interface (API) for further processing.

2. Method according to Claim 1, **characterized in that**, apart from results (Aprim) from the first planning step, that is to say the primary technical planning, results from subsequent processing on the basis of secondary technical planning results are also output, in particular, by means of an output device (A).

3. Method according to Claim 1 or 2, **characterized in that** module rules (M) which are used to form the specific process module variants (SPM, GSPM) are also stored in the catalogue (KAT).

## Revendications

1. Procédé pour la planification d'un système technique complexe basée sur la connaissance, dans lequel
a) le système est divisé, au cours d'un processus de division, en une partie de technique primaire (technique primaire) pilotant le processus de planification et au moins une partie de technique secondaire (technique secondaire) dépendant de cette première partie,
b) au cours d'un premier processus de préparation, la partie de technique primaire est divisée en modules de processus généraux (PM) qui contiennent des éléments de substitution (H) adaptables pour des composants,
c) au cours d'un deuxième processus de préparation, des classes (KL) sont définies de manière spécifique en fonction de l'objet, y compris les attributs et informations associés, et sont mémorisées dans un catalogue (KAT),
d) des variantes de modules de processus spécifiques (SPM) sont formées dans une première étape de planification exécutée comme processus descendant, une entrée de réponses à des questions (q) spécifiques de module et une entrée de prédéfinitions de technique primaire (P1), valables pour l'ensemble de l'installation, étant effectuées à l'aide d'un dialogue d'interrogation, et les éléments de substitution (H) étant remplacés par des composants concrets, en tenant compte de ces prédéfinitions et en utilisant les classes (KL) mémorisées,
e) au cours d'une deuxième étape de planification exécutée comme processus ascendant, sur la base des variantes de modules de processus spécifiques (SPM) formées au cours de la première étape de planification, ou sur la base des variantes de modules de processus modifiées au cours d'une étape intermédiaire (GSPM), et en tenant compte de prédéfinitions de la technique secondaire (P2), valables pour toute l'installation et entrées et mémorisées auparavant, ainsi que des classes (KL) mémorisées, on élabore, au moyen d'un outil de planification (VE) travaillant de manière automatique et contenant des connaissances spécifiques de la technique secondaire sous forme de règles de domaine (D), des résultats de planification de technique secondaire, indépendants du système de solution, et on les met à disposition dans une Application Programming Interface (API), en vue de leur traitement ultérieur.

2. Procédé selon la revendication 1, **caractérisé en ce que**, de plus, des résultats (Aprim) de la première étape de planification, c'est-à-dire de la planification de technique primaire, et notamment aussi des résultats d'un post-traitement sur la base des résultats de planification de technique secondaire sont délivrés à l'aide d'un dispositif d'édition (A).

3. Procédé selon la revendication 1 ou 2, **caractérisé en ce que** des règles de module (M) sont également mémorisées dans le catalogue (KAT) et sont utilisées pour former les variantes de modules de processus spécifiques (SPM, GSPM).
